# EUROPÄISCHE PATENTANMELDUNG

(11) **EP 4 632 974 A1**
(43) Veröffentlichungstag der Anmeldung: **15.10.2025**
(21) Anmeldenummer: 25168350.4
(22) Anmeldetag: 03.04.2025
(51) Int. Cl.: H02G 3/04, F16L 3/10, F16L 3/24, H01R 4/2408, H01R 4/38, H02G 3/32

(54) **BÜGELSCHELLE**

(30) Priorität: 09.04.2024 DE 202024101711 U
(71) Anmelder: OBO Bettermann Hungary Kft., 2347 Bugyi (HU)
(72) Erfinder: Bodai, Róbert, 2300 Dunaharaszti (HU); Kardos, Gyula, 2040 Budaörs (HU); Magyari, Valentin, 2366 Kakucs (HU)
(74) Vertreter: Haverkamp Patentanwälte PartG mbB

(57) **Zusammenfassung**

Die Erfindung betriff eine Bügelschelle 1 zum Befestigen eines Langgutes, etwa eines elektrischen Kabels 2, an einer einen hinterschnittenen Befestigerkanal 4 aufweisenden Tragstruktur, etwa einer Sprosse 3 einer Kabelleiter, welche Bügelschelle 1 ein Bügelteil 7, durch dessen Schenkel 19, 20 und dessen die Schenkel 19, 20 verbindendes Brückenteil 15 eine Langgutaufnahme 10 eingefasst ist und dessen Schenkel 19, 20 an ihrem Ende zumindest einen in den Hinterschnitt eines Befestigerkanals 4 der Tragstruktur einsetzbaren, quer zur Längserstreckung des Befestigerkanals 4 ausgerichteten Widerlagerabschnitt 23, 24 tragen, sowie eine gegenüber den Schenkeln 19, 20 in Richtung ihrer Längserstreckung verstellbaren und zum Befestigen eines Langgutes an einer Tragstruktur auf ein die Langgutaufnahme 10 durchgreifendes Langgut wirkenden Druckplatte 11 und eine auf die Druckplatte 11 wirkende Spanneinrichtung zum Verspannen eines die Langgutaufnahme 10 durchgreifenden Langgutes an der Tragstruktur aufweist.

Besonderes Kennzeichen dieser Bügelschelle 1 ist, dass das Bügelteil 7 mehrteilig ausgelegt ist und ein erstes Bügelelement 8 und ein zweites Bügelelement 9 umfasst, bei welchen Bügelelementen 8, 9 die Widerlagerabschnitte 23, 24 ihrer Verankerungsorgane 21, 22 in entgegengesetzte Richtungen weisend angeordnet sind und dass die Bügelelemente 8, 9 gegeneinander in Richtung des Durchgriffes eines Langgutes durch die Langgutaufnahme 10 zur Reduzierung der effektiven Spannweite S der Bügelschelle 1, in dem Abschnitt ihrer Verankerungsorgane 21, 22 zwecks Einführen der Verankerungsorgane 21, 22 in einen Befestigerkanal 4 einer Tragstruktur verstellbar sind.

## Beschreibung

Gegenstand der Erfindung ist eine Bügelschelle zum Befestigen eines Langgutes, etwa eines elektrischen Kabels, an einer einen hinterschnittenen Befestigerkanal aufweisenden Tragstruktur, etwa einer Sprosse einer Kabelleiter, welche Bügelschelle ein Bügelteil, durch dessen Schenkel und dessen die Schenkel verbindendes Brückenteil eine Langgutaufnahme eingefasst ist und dessen Schenkel an ihrem Ende zumindest einen in den Hinterschnitt eines Befestigerkanals der Tragstruktur einsetzbaren, quer zur Längserstreckung des Befestigerkanals ausgerichteten Widerlagerabschnitt tragen, sowie eine gegenüber den Schenkeln in Richtung ihrer Längserstreckung verstellbaren und zum Befestigen eines Langgutes an einer Tragstruktur auf ein die Langgutaufnahme durchgreifendes Langgut wirkenden Druckplatte und eine auf die Druckplatte wirkende Spanneinrichtung zum Verspannen eines die Langgutaufnahme durchgreifenden Langgutes an der Tragstruktur aufweist.

Derartige Bügelschellen werden eingesetzt, um Langgüter, wie etwa elektrische Kabel oder dergleichen an einer Tragstruktur, beispielsweise der Sprosse einer Kabelleiter zu befestigen. Eine solche Bügelschelle umfasst ein typischerweise U-förmig ausgeführtes Bügelteil. Das Bügelteil umfasst zwei mit Abstand zueinander angeordnete Schenkel und ein die beiden Schenkel verbindendes Brückenteil. Durch das Bügelteil ist eine Langgutaufnahme eingefasst, durch die ein zu befestigendes Langgut hindurchgeführt wird. An den von dem Brückenteil wegweisenden Enden tragen die Schenkel jeweils ein Verankerungsorgan. Die Verankerungsorgane sind ausgelegt, um in einen Hinterschnitt der Tragstruktur eingesetzt zu werden, um durch den Eingriff in den Hinterschnitt ein Spannwiderlager bereitzustellen. Jedes Verankerungsorgan verfügt zum Eingriff in einen Hinterschnitt des Befestigerkanals über zumindest einen Widerlagerabschnitt, der quer zur Längserstreckung des Befestigerkanals der Tragstruktur bzw. in Richtung der Längserstreckung der Langgutaufnahme ausgerichtet ist. Bügelschellen dieser Art tragen an den Verankerungsorganen ihrer Schenkel entweder jeweils einen in dieselbe Richtung weisenden Widerlagerabschnitt oder jeder Schenkel verfügt über zwei einander in entgegengesetzte Richtungen weisende Widerlagerabschnitte. Eine Bügelschelle mit einseitig orientierten Widerlagerabschnitten dient zum Befestigen derselben einseitig und somit nur an einem Randbereich einer Mündung eines Befestigerkanals einer Tragstruktur. Im anderen Fall ist das Verankerungsorgan mit seinen Widerlagerabschnitten nach Art eines Hammerkopfes ausgelegt und hintergreift beide, eine Montageöffnung eines Befestigerkanals einer Tragstruktur begrenzenden Abschnitte. Derartige Bügelschellen können aufgrund der erforderlichen Auslegung der Verankerungsorgane mit ihren Widerlagerabschnitten nicht durch lediglich eine translatorische Bewegung in die Montageöffnung eines Befestigerkanals einer Tragstruktur eingesetzt werden. Diese vorbekannten Bügelschellen müssen um die Widerlagerabschnitte in den Hinterschnitt einbringen zu können, mit ihren Verankerungsorganen in die Montageöffnung des Befestigerkanals eingeschwenkt oder eingedreht werden. Bügelschellen mit Verankerungsorganen, die jeweils zwei voneinander wegweisende Widerlagerabschnitte aufweisen, müssen aus diesem Grunde eine ungleiche Länge aufweisen. Zudem ist es bei einer solchen Bügelschelle nicht möglich, den Widerlagerabschnitt hakenförmig auszubilden, wie dieses bei Bügelschellen mit nur einseitigen Widerlagerabschnitten der Fall ist. Eine solche hakenförmige Ausbildung der Widerlagerabschnitte ist für viele Anwendungen bevorzugt, da die Montageöffnung derartiger Befestigerkanäle typischerweise in den Befestigerkanal gerichtete kurze Schenkel begrenzt ist. Durch diese Schenkel ist die Montageöffnung, ihrer Längserstreckung folgend, seitlich eingefasst. Mit dem Haken eines solchermaßen ausgebildeten Widerlagerabschnittes kann dann auch in den durch diese abgekanteten Schenkel bereitgestellten Hinterschnitt eingegriffen werden.

Derartige Bügelschellen sind von der Anmelderin bekannt. Diese werden beispielsweise unter der Bezeichnung BS-U1-M oder BS-H1-M vertrieben. Bekannt ist eine solche Bügelschelle auch aus DE 10 54 293 A.

Als nachteilig wird bei derartigen Bügelschellen mitunter empfunden, dass diese, damit diese bestimmungsgemäß in eine Montageöffnung eines Befestigerkanals einer Tragstruktur eingeschwenkt werden können, eine entsprechende Höhe der Schenkel des Bügelteils aufweisen müssen, wenn die Bügelschelle mit einem durch seine Langgutaufnahme hindurchgeführten Langgut an der Tragstruktur befestigt werden soll. Ein Eindrehen einer solchen Bügelschelle ist mit einem durch seine Langgutaufnahme bereits hindurchgeführten Langgut nur möglich, wenn benachbart zu der vorgesehenen Montagestelle ein entsprechender Freiraum vorhanden ist. Ist eine solche Tragstruktur bereits mit mehreren Langgütern bestückt, kann in einen noch vorhandenen Freiraum eine solche Bügelschelle nur ohne das mit dieser Bügelschelle zu befestigende Langgut, montiert werden. Das Langgut kann bei einer solchen Verwendung erst anschließend durch den Langgutkanal hindurchgeführt werden.

Aus US 3 522 921 ist eine Klemme zum Anschließen eines Rohres an eine Tragstruktur offenbart. Diese Klemme verfügt über zwei Bügelteile. Die Scheitellinie der beiden Bügelteile ist gegenüber der Längserstreckung der Bügelteile angestellt, beispielsweise mit 10° bzw. 80°, und zwar gegensinnig. Diese bewirkt, dass, wenn die Bügelscheitel der beiden Bügelelemente auf ein die Rohraufnahme durchgreifendes Rohr wirken, sind diese aufgrund der Auslegung ihrer Scheitellinie bestrebt, sich an die Oberfläche des zu befestigenden Rohres anzulegen. Die Anstellung der Scheitellinie ist dabei derart ausgeführt, dass die Bügelteile mit ihren Widerlagerabschnitten gespreizt werden. Ein Anschluss dieser Klemme an eine Tragstruktur ist nur mit einem seine Rohraufnahme durchgreifenden Rohr möglich.

Ausgehend von dem vorstehend beschriebenen Stand der Technik liegt somit der Erfindung die Aufgabe zu Grunde, eine Bügelschelle vorzuschlagen, die auch bei beengten Montageverhältnissen und mit auch ohne einem durch seine Langgutaufnahme hindurchgeführten Langgut ohne weiteres durch Einbringen der Widerlagerabschnitte seiner Verankerungsorgane in den Befestigerkanal einer Tragstruktur angeschlossen werden kann, wobei ein Eingriff in die einander bezüglich der Montageöffnung gegenüberliegenden Hinterschnitte des Befestigerkanals bevorzugt wäre.

Gelöst wird diese Aufgabe erfindungsgemäß durch eine eingangs genannte, gattungsgemäße Bügelschelle, bei der das Bügelteil mehrteilig ausgelegt ist und ein erstes Bügelelement und ein zweites Bügelelement umfasst, bei welchen Bügelelementen die Widerlagerabschnitte ihrer Verankerungsorgane in entgegengesetzte Richtungen weisend angeordnet sind und bei der die Bügelelemente gegeneinander in Richtung des Durchgriffes eines Langgutes durch die Langgutaufnahme zur Reduzierung der effektiven Spannweite der Bügelschelle in dem Abschnitt ihrer Verankerungsorgane zwecks Einführen der Verankerungsorgane in einen Befestigerkanal einer Tragstruktur verstellbar sind.

Das Besondere dieser Bügelschelle ist, dass sein Bügelteil mehrteilig ausgelegt ist. Das Bügelteil umfasst ein erstes Bügelelement und ein zweites Bügelelement. Durch jedes Bügelelement ist ein Schenkel des Bügelteils mit einem Verankerungsorgan bereitgestellt. Die Widerlagerabschnitte der Verankerungsorgane der beiden Bügelelemente sind in entgegengesetzte Richtungen weisend vorgesehen. Damit hintergreift der Widerlagerabschnitt jedes Bügelelementes, wenn in den Befestigerkanal einer Tragstruktur eingesetzt, eine seitliche Einfassung des Befestigerkanals einer Tragstruktur. In der Zusammenschau mit beiden Bügelelementen greift das Bügelteil mit seinen Widerlagerabschnitten der Verankerungsorgane in die beiden einander bezüglich der Montageöffnung gegenüberliegenden Hinterschnitte eines Befestigerkanals ein. Die beiden Bügelelemente sind, um diese mit ihren Widerlagerabschnitten in die bezüglich der Längserstreckung der Montageöffnung gegenüberliegenden Hinterschnitte des Befestigerkanals einbringen zu können, gegeneinander verstellbar, und zwar um die effektive Spannweite der Bügelschelle in dem Abschnitt der Widerlagerabschnitte ihrer Verankerungsorgane reduzieren zu können. Sind die Bügelelemente zum Einsetzen ihrer Widerlagerabschnitte in den Befestigerkanal einer Tragstruktur verstellt, weist die Bügelschelle in dem Abschnitt ihrer Verankerungsorgane nur noch eine reduzierte Spannweite auf. Die Verstellrichtung der beiden Bügelelemente gegeneinander ausgehend von einer Stellung der Verankerungsorgane zueinander mit ihrer effektiven Spannweite ist in Richtung des Durchgriffes eines Langgutes durch die Langgutaufnahme und damit in Richtung der quer zur Längserstreckung verlaufenden Weite der Montagerichtung eines Befestigerkanals vorgesehen. Hierdurch kann die effektive Spannweite der Bügelschelle in dem Abschnitt ihrer Verankerungsorgane und damit ihre Spannweite an ihren Widerlagerabschnitten ausgehend von einer Auslieferungsstellung, die typischerweise der Verankerungsstellung entspricht, reduziert werden, sodass beide Verankerungsorgane in dieser Stellung des Bügelteils durch die Montageöffnung eines Befestigerkanals allein durch Ausüben einer translatorischen Montagebewegung hindurchgeführt werden können. Sind die Widerlagerabschnitte der beiden Bügelelemente durch die Montageöffnung eines Befestigerkanals hindurchgeführt, werden diese gegeneinander gespreizt, damit die Widerlagerabschnitte in den jeweiligen Hinterschnitt des Befestigerkanals eingreifen. In einem bevorzugten Ausführungsbeispiel ist die Verstellbarkeit der Bügelelemente zueinander gegen die Rückstellkraft eines Federelementes vorgesehen, sodass der vorbeschriebene Spreizvorgang und damit das Einbringen der Widerlagerabschnitte in die Hinterschnitte selbsttätig erfolgt. Bei einer solchen Ausgestaltung erfolgt das Einsetzen der Widerlagerabschnitte in den hinterschnittenen Befestigerkanal gegen die Rückstellkraft eines solchen Federelementes.

Eine solche Bügelschelle kann problemlos mit oder ohne durch seine Langgutaufnahme hindurchgeführtem Langgut selbst bei beengten Montageverhältnissen an einer Tragstruktur montiert werden. Daher braucht eine solche Bügelschelle keine zusätzliche Höhe aufweisen, damit ein Einschwenken in die Montageöffnung eines Befestigerkanals bei durch seine Langgutdurchführung hindurchgeführten Langgut möglich ist. Vorteilhaft ist ferner, dass eine solche Bügelschelle die Montageöffnung eines Befestigerkanals beidseitig hintergreift. Im Unterschied zu herkömmlichen Bügelschellen mit hammerkopfförmigen Verankerungsorganen an seinen Schenkeln können die Widerhakenabschnitte auch hakenförmig ausgelegt sein, sodass ein beidseitiger Hintergriff durch die Verankerungsorgane auch bei solchen Tragstrukturen möglich ist, bei denen die Montageöffnung durch in den Befestigerkanal weisend abgekantete Schenkel begrenzt ist.

Die gelenkige Ineingriffstellung der beiden Bügelelemente des Bügelteils dieser Befestigungsschelle kann dadurch erreicht werden, dass die Bügelelemente erste und zweite Stützabschnitte tragen, durch die, wenn miteinander in Eingriff gestellt, das Brückenteil bereitgestellt wird. Diese ersten und zweiten Stützabschnitte sind dergestalt ausgelegt, dass jedes Bügelelement mit einem ersten Stützabschnitt auf einem zweiten Stützabschnitt des jeweils anderen Bügelelements in Richtung zur Langgutaufnahme abgestützt ist. Die ersten und zweiten Stützabschnitte der Bügelelemente höhenversetzt zueinander angeordnet, wobei der Höhenversatz typischerweise der Materialstärke eines Stützabschnittes eines solchen Bügelelementes entspricht. Die Stützabschnitte sind gemäß einer Ausgestaltung aus der Ebene der Schenkel des jeweiligen Bügelelementes in Richtung zu dem anderen Bügelelement abgewinkelte Fortsätze oder Bestandteile eines abgewinkelten Schenkels mit den beiden Stützabschnitten.

Für die formschlüssige Ineingriffstellung der beiden Bügelelemente im Bereich ihrer Stützabschnitte ist in einem Ausführungsbeispiel vorgesehen, an zumindest einem Stützabschnitt jedes Bügelelementes einen gegenüber diesem abgewinkelten Anschlag anzuformen. Dieser wirkt für die formschlüssige Anordnung der beiden Bügelelemente in Richtung der Längserstreckung der Langgutaufnahme bei in Eingriff gestellten Stützabschnitten mit dem benachbarten Stützabschnitt des jeweils anderen Bügelelementes zusammen. In einer Weiterbildung einer solchen Ausgestaltung eines Anschlages ist vorgesehen, einen solchen Anschlag hinsichtlich seiner flächigen Erstreckung so auszulegen, dass dieser eine weitere Funktionalität einnimmt. Beispielsweise kann durch einen solchen Anschlag zugleich ein Teil einer Aufnahme für eine Komponente der Spanneinrichtung, wie etwa einer Spannmutter, bereitgestellt sein. In einem solchen Fall wird ein solcher Anschlag vorzugsweise von seiner flächigen Erstreckung etwas größer ausgelegt werden, um eine wirksame Anlagefläche für eine Schlüsselfläche einer Spannmutter bereitzustellen. In einer anderen Ausgestaltung einer weiteren Nutzung eines solchen Anschlages ist vorgesehen, diesen als Schenkelteil auszuführen, der hinsichtlich der Orientierung seines Verankerungsorgans mit dem daran befindlichen Widerlagerabschnitt genauso ausgeführt ist wie der eigentliche Schenkel dieses Bügelelementes. Dann verfügen beide Bügelelemente jeweils über zwei Schenkelteile, die bei in Eingriff gestellten Bügelelementen sodann die Schenkel des Bügelteils ausbilden. Jeder Schenkel des Bügelteils ist dann durch zwei Schenkelteile breitgestellt, wobei jeder Schenkelteil Teil eines anderen Bügelelementes ist. Bei dieser Ausgestaltung verfügt die Bügelschelle sodann im Bereich jedes Schenkels über Verankerungsorgane, deren Widerlagerabschnitte in entgegengesetzte Richtungen weisen. Bei einer solchen Ausgestaltung ist an jedem Schenkel eine beidseitige Verriegelung an dem Befestigerkanal gegeben. Die Stützabschnitte können auch unabhängig davon, ob an diesen ein Anschlag angeformt ist, abgewinkelte Funktionsflächen, wie vorstehend beschrieben, tragen.

Als Spanneinrichtung kann beispielsweise eine Spannschraube und eine Spannmutter vorgesehen sein. Die Spannschraube durchgreift dann die Stützabschnitte der Bügelelemente, wobei in einem Ausführungsbeispiel vorgesehen ist, dass die ersten und zweiten Stützabschnitte eines solchen Bügelelementes durch eine von der Spannschraube durchgriffene Spannmittelaussparung voneinander getrennt bzw. beabstandet sind.

In einem bevorzugten Ausführungsbeispiel wirkt auf die Oberseite der miteinander in Eingriff gestellten Stützabschnitte der Bügelelemente unter Vorspannung stehend eine Stellplatte. Diese kann gegen die Rückstellkraft der Vorspannkraft verstellt werden. Durch die Stellplatte werden die Bügelelemente in einer Stellung zueinander gehalten, in der die Widerlagerabschnitte ihrer Verankerungsorgane in die Hinterschnitte eines Befestigerkanals eingreifen, mithin voneinander gespreizt sind. Dieses ist typischerweise die Auslieferungsstellung einer solchen Bügelschelle bezüglich ihrer Bügelelemente. Eine Verstellung der Bügelelemente zur Reduzierung der Spannweite ihrer Widerlagerabschnitte wirkt mit der Oberseite ihrer Stützabschnitte dann gegen die Vorspannkraft, sodass nach Durchführen der Verankerungsorgane durch die Montageöffnung eines Befestigerkanals diese bzw. ihre Widerlagerabschnitte selbsttätig in den jeweiligen Hinterschnitt einspringen. Die Vorspannkraft kann beispielsweise durch eine Schraubendruckfeder bereitgestellt werden, die auf dem Gewindeschaft einer Spannschraube sitzt. Als Stellplatte dient bei einer solchen Ausgestaltung typischerweise eine entsprechend dimensionierte Beilagscheibe.

Zum Aufbringen eines Spanndruckes auf ein die Langgutaufnahme durchgreifenden Langgutes dient die Druckplatte, über die die Spannkraft über einen Bereich der Oberfläche des Langgutes verteilt wird. Bei Vorsehen einer Spannschraube als Bestandteil der Spanneinrichtung ist gemäß einem Ausführungsbeispiel diese mit ihrem Fuß an die Druckplatte angeschlossen, typischerweise bei einem Nietvorgang, bei dem der Fuß der Spannschraube eine entsprechende Öffnung der Druckplatte durchgreift und entsprechend aufgeweitet wird. Eine solche Druckplatte kann zwei Schenkeldurchbrechungen aufweisen. Diese dienen dem Zweck, dass jeweils der Schenkel eines Bügelelementes eine solche Schenkeldurchbrechung durchgreift. Diese dienen zur Führung der gegeneinander verstellbaren Bügelelemente.

Infolge des zentralen bzw. mittigen Aufbringens der Spannkraft auf ein die Langgutaufnahme durchgreifenden Langgutes in Bezug auf die Weite einer Montageöffnung einer Tragstruktur wird das Langgut gleichermaßen an beiden die Montageöffnung begrenzenden Abschnitten an der Tragstruktur fixiert bzw. gegen diese verspannt.

Durchaus möglich ist auch eine Ausgestaltung, bei der der Bügelschelle ein zusätzliches Auflageglied zugeordnet ist, durch welches die Langgutaufnahme in Richtung zu dem Verankerungsorgan begrenzt ist. Ein solches Auflageglied erstreckt sich typischerweise über die Breite der Tragstruktur, beispielsweise der Sprosse einer Kabelleiter. Das Langgut liegt sodann auf der Oberseite des Auflagegliedes auf. Dieses ist zweckmäßigerweise U-förmig ausgeführt, ebenso wie die Druckplatte, wobei die Öffnungsseiten von Druckplatte und Auflageglied zueinander weisen. Ein solches Auflageglied kann ebenfalls wie die Druckplatte zwei Schenkeldurchbrechungen aufweisen, die jeweils von dem Schenkel eines Bügelelementes durchgriffen sind. Möglich ist auch eine Ausgestaltung, bei der die Druckplatte nicht unmittelbar auf die Mantelfläche eines durch die Langgutaufnahme geführten Langgutes wirkt, sondern unter Zwischenschaltung eines typischerweise größer dimensionierten Spanngliedes. Bei einer solchen Ausgestaltung kann dieses Schenkeldurchbrechungen aufweisen. Die Druckplatte selbst kann sich dann insgesamt zwischen den Schenkeln befinden und benötigt keine Schenkeldurchbrechungen.

Wenn gewünscht, kann eine solche Bügelschelle als Erdungsschelle ausgelegt sein. Dann verfügt zumindest die Druckplatte oder, falls die Druckplatte auf ein Spannglied wirkt, letztere über typischerweise mehrere Durchdringungskörper. Die elektrisch leitende Verbindung zu der elektrisch leitenden Tragstruktur erfolgt über das Bügelteil. Bei einer solchen Ausgestaltung ist es aufgrund der Kontaktierung bevorzugt, wenn die Bügelschelle ebenfalls über ein Auflageglied verfügt, das dann ebenfalls mit Durchdringungskörpern ausgestattet ist. Im Zuge des Spannens der Bügelschelle werden die Durchdringungskörper durch die Mantelisolation des die Langgutaufnahme durchgreifenden elektrischen Kabels hindurchgedrückt, um die elektrische Kontaktierung des äußeren Erdleiters zu bewirken.

Nachfolgend ist die Erfindung anhand von Ausführungsbeispielen unter Bezugnahme auf die beigefügten Figuren erläutert. Es zeigen:
- **Fig. 1:**: Eine perspektivische Ansicht einer an einer Sprosse als Tragstruktur befestigten erfindungsgemäßen Bügelschelle,
- **Fig. 2:**: eine perspektivische Ansicht der Bügelschelle der Figur 1 in Alleindarstellung,
- **Fig. 3:**: die Bügelschelle der Figur 2 mit ihren Komponenten, dargestellt nach Art einer Explosionsdarstellung,
- **Fig. 4:**: eine Einsicht in die Langgutaufnahme des Bügelteils der Bügelschelle der vorstehenden Figuren,
- **Fig. 5:**: eine Seitenansicht der Bügelschelle mit gegeneinander in Richtung der Längserstreckung der Langgutaufnahme verstellten Bügelelementen des Bügelteils,
- **Fig. 6:**: die Bügelschelle mit einem durch ihre Langgutaufnahme hindurchgeführten Langgut bei dem Vorgang des Befestigens derselben an der Sprosse,
- **Fig. 7:**: die Darstellung der an einer Sprosse befestigten Bügelschelle mit einem durch ihre Langgutaufnahme hindurchgeführten Langgut gemäß Figur 1 in einer Seitenansicht,
- **Fig. 8:**: eine perspektivische Darstellung einer weiteren erfindungsgemäßen Bügelschelle befestigt an einer Sprosse als Tragstruktur,
- **Fig. 9:**: eine perspektivische Alleindarstellung der Bügelschelle der Figur 8 und

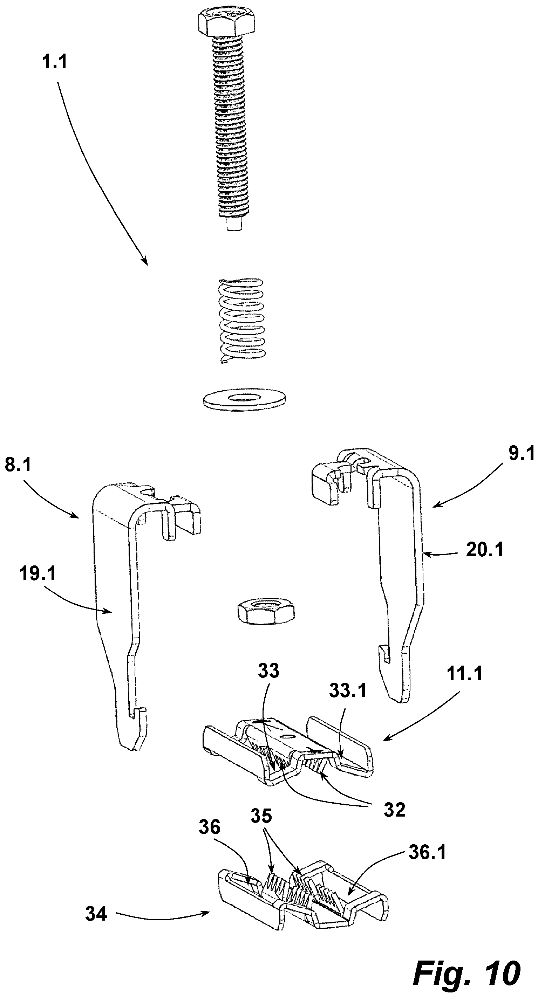

- **Fig. 10:**: eine perspektivische Darstellung der Bügelschelle der Figur 9, dargestellt nach Art einer Explosionsdarstellung.

Eine Bügelschelle 1 dient zum Befestigen eines Langgutes, welches bei dem dargestellten Ausführungsbeispiel ein elektrisches Kabel 2 ist, an einer Tragstruktur. Die Tragstruktur ist bei dem dargestellten Ausführungsbeispiel durch eine Sprosse 3 einer im Übrigen nicht näher dargestellten Kabelleiter realisiert. Die Sprosse 3 verfügt über einen seiner Längserstreckung folgenden Befestigerkanal 4 mit einer ebenfalls seiner Längserstreckung folgenden Montageöffnung 5. Der Befestigerkanal 4 ist beidseitig zu der Montageöffnung 5 hinterschnitten. Bei dem dargestellten Ausführungsbeispiel ist die Montagöffnung 5 durch zwei in Richtung zum Befestigerkanal 4 abgewinkelte Schenkel 6, 6.1 begrenzt.

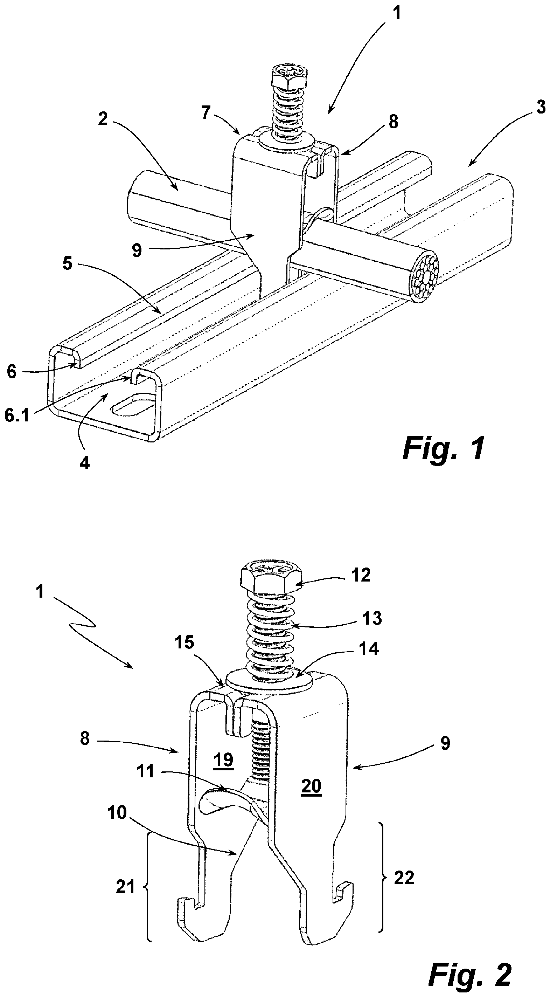

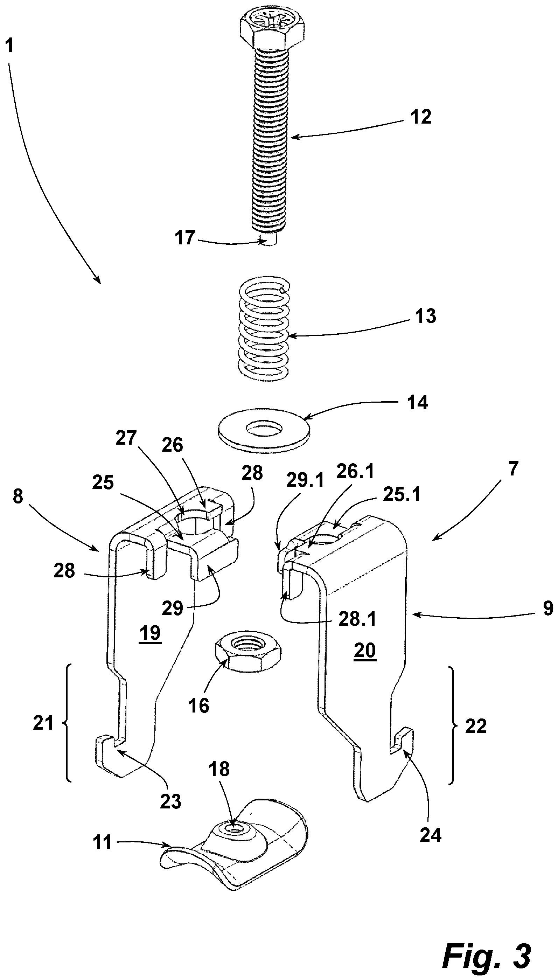

Die Bügelschelle 1 verfügt über ein Bügelteil 7 (siehe auch Figuren 2 und 3). Das Bügelteil 7 des dargestellten Ausführungsbeispiels besteht aus zwei Bügelelementen 8, 9, die, wenn miteinander in Eingriff gestellt, das Bügelteil 7 bilden. Eingefasst durch das Bügelteil 7 ist eine Langgutaufnahme 10, die, wie in Figur 1 erkennbar, von dem an der Sprosse 3 montierten Kabel 2 durchgriffen ist. Die Bügelschelle 1 umfasst ferner eine Druckplatte 11, die zum Befestigen der Bügelschelle 1 mit dem Kabel 2 an der Sprosse 3 gegen einen oberen Abschnitt der Mantelfläche des elektrischen Kabels 2 wirkt. Als Spanneinrichtung verfügt die Bügelschelle 1 über eine Spannschraube 12, die unter Zwischenschaltung einer Druckfeder 13 und einer Stellplatte 14 auf das die Oberseite des Bügelteils 7 bildende Brückenteil 15 wirkt. An der Unterseite des Brückenteils 15 befindet sich eine Spannmutter 16 (siehe Figur 3). Angeschlossen an das Fußende der Spannschraube 12 ist die Druckplatte 11. Der Fuß der Spannschraube 12 verfügt über einen Nietfortsatz 17, der eine Öffnung 18 der Druckplatte 11 durchgreift und mit dieser vernietet ist, und zwar unter Belassung der Drehbeweglichkeit der Spannschraube 12 gegenüber der Druckplatte 11. Die Druckplatte 11 ist zwischen den Bügelelementen 8, 9 aufgrund ihrer Umrissgeometrie drehentkoppelt gegenüber der Drehbewegung der Spannschraube 12 gehalten.

Jedes Bügelteil 8, 9 verfügt über einen Schenkel 19, 20, die an ihrer Unterseite jeweils in Verankerungsorgan 21, 22 tragen. Die Verankerungsorgane 21, 22 verfügen jeweils über einen Widerlagerabschnitt 23, 24, mit dem der Befestigerkanal 4 hintergriffen wird. Die Widerlagerabschnitte 23, 24 sind hakenförmig ausgelegt und weisen in entgegengesetzte Richtungen. Daher hintergreift die Bügelschelle 1 mit ihren Widerlagerabschnitten 23, 24 die Montageöffnung 5 beidseitig, wie dieses herkömmlich von hammerkopfförmigen Verankerungsorganen bekannt ist.

Zur Bereitstellung des die Schenkel 19, 20 verbindende Brückenteils 15 verfügt jedes Bügelelement 8, 9 über zwei komplementäre Stützabschnitte, einen ersten Stützabschnitt 25, 26 und einen zweiten Stützabschnitt 25.1, 26.1. Hierbei handelt es sich um aus der Ebene der Schenkel 19, 20 abgewinkelte Fortsätze. Die Stützabschnitte 25, 26; 25.1, 26.1 sind ausgelegt, damit, wenn die beiden Bügelelemente 8, 9 miteinander über die Stützabschnitte 25, 26; 25.1, 26.1 in Eingriff gestellt sind, das Brückenteil 15 gebildet ist. Die ersten Stützabschnitte 25, 25.1 sind gegenüber den zweiten Stützabschnitten 26, 26.1 höhenversetzt angeordnet und befinden sich bei dem dargestellten Ausführungsbeispiel gegenüber der Ebene der zweiten Stützabschnitte 26, 26.1 in einer vertieften Stellung. Der Höhenversatz entspricht der Materialstärke der darauf zur Anlage gelangenden zweiten Stützabsätze 26, 26.1. Zwischen den ersten und zweiten Stützabschnitten 25, 26; 25.1, 26.1 befindet sich in jedem Bügelelement 8, 9 eine Spannmittelaussparung 27. Der gegenüber den Schenkeln 8, 9 abgewinkelte Abschnitt der Bügelelemente 8, 9 verfügt ferner über gegenüber der Ebene des Brückenteils 15 abgekantete Anschläge, wobei jedes Bügelelement zwei derartige Anschläge 28, 28.1 aufweist. Die Anschläge 28, 28.1 dienen mit ihren zueinander weisenden Flachseiten als Anschlag und zugleich als Verstellfläche, wenn die Bügelelemente 8, 9 in Richtung der Längserstreckung der Langgutaufnahme 10 gegeneinander verstellt werden. Bei miteinander in Eingriff gestellten Bügelelementen 8, 9 befinden sich die Anschläge 28 bzw. 28.1 in einer Ebene. Ferner dienen die Anschläge 28, 28.1 dazu um die beiden Bügelelemente 8, 9 in ihrer in Eingriffstellung in Längsrichtung der Langgutaufnahme 10 formschlüssig aneinander zu halten. Die Anschläge 28, 28.1 wirken zu diesem Zweck mit den Schmalseiten der Stützabschnitte 25, 26; 25.1, 26.1 zusammen.

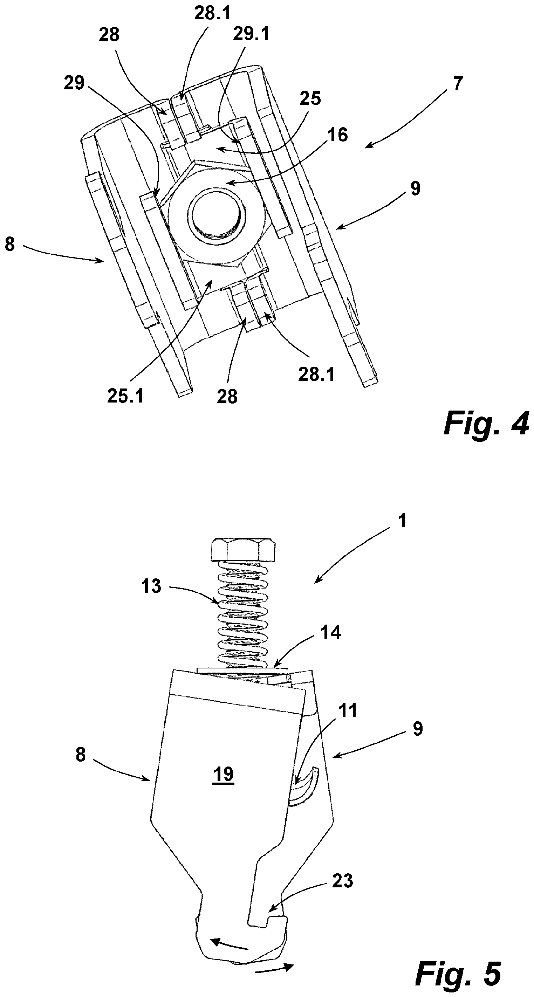

Die Ineingriffstellung der beiden Bügelelemente 8, 9 zur Ausbildung des Bügelteils 7 ist in Blickrichtung auf die Unterseite des Brückenteils 15 in Figur 4 abgebildet. Die ersten Stützabschnitte 25, 25.1 tragen an ihren Enden jeweils einen in Richtung zur Langgutaufnahme 10 abgekanteten Spannmutteranlagefortsatz 29, 29.1, durch die eine Aufnahme für die Spannmutter 16 bereitgestellt ist. Die Flachseiten der Spannmutteranlagefortsätze 29, 29.1 weisen einen Abstand voneinander auf, damit die Spannmutter 16 mit zwei einander gegenüberliegenden Schlüsselflächen daran anliegt, zumindest zwischen diesen drehmomentschlüssig gehalten ist.

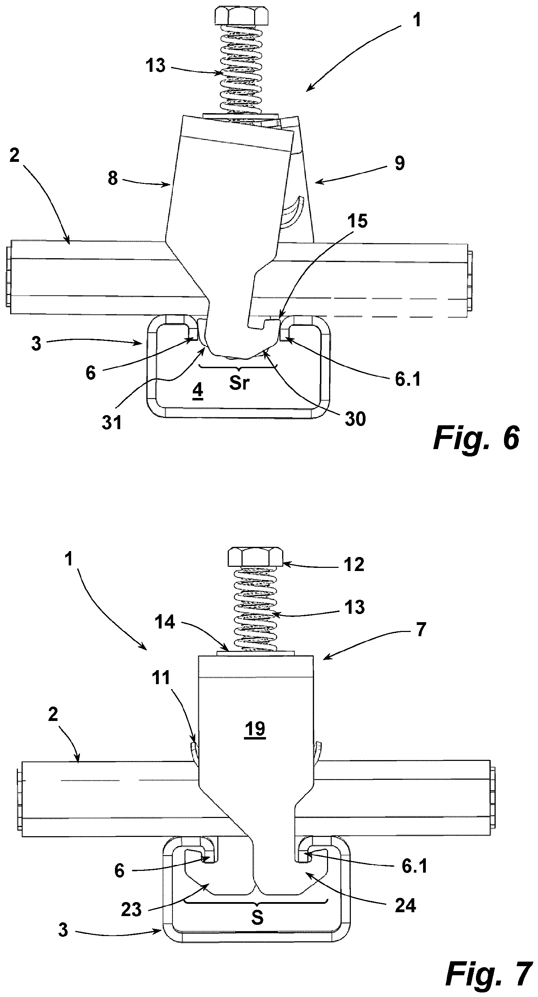

Aufgrund der beschriebenen Ineingriffstellung der beiden Bügelelemente 8, 9, sind diese, wie in Figur 5 gezeigt, in Richtung der Längserstreckung der Langgutaufnahme 10 gegeneinander verstellbar. Durch die Druckfeder 13 werden die Bügelelemente 8, 9 im Auslieferungszustand in ihrer in Figur 2 gezeigten Stellung gehalten, bei der die Oberseiten der Bügelelemente 8, 9 miteinander fluchten. Diese Verstellmöglichkeit der Bügelelemente 8, 9 gegeneinander ist in Figur 5 mit Pfeilen angedeutet. Figur 5 zeigt die gegeneinander verstellten Bügelelemente 8, 9. Dieses ermöglicht, die Spannweite S der Verankerungsorgane 21, 22 in Richtung der Längserstreckung der Langgutaufnahme 10 zu reduzieren, sodass die Bügelschelle 1 im Bereich ihrer Verankerungsorgane 21, 22, dann eine reduzierte Spannweite Sr aufweist, um diese in die Montageöffnung 5 der Sprosse 3 einsetzen zu können. Die Spannweiten Sr und S der Verankerungsorgane 21, 22 sind in den Figuren 6 und 7 eingetragen. Die Stellung der beiden Bügelelemente 8, 9 des Bügelteils 7 der Bügelschelle 1 mit dem seine Langgutaufnahme 10 durchgreifende Kabel 2 bei dem Vorgang einer Montage an der Sprosse 3 ist in Figur 6 gezeigt. Die Verankerungsorgane 21, 22 verfügen zu diesem Zweck über endseitige Stellschrägen 30, 31, die mit den durch die Schenkel 6, 6.1 mit der Oberseite der Sprosse 3 gebildeten Kanten zusammenwirken, sodass die Bügelelemente 8, 9 selbsttätig verstellt werden, und zwar allein durch eine translatorische Bewegung der Bügelschelle 1 in Richtung zur Montageöffnung 5. Dieses Verstellen der Bügelelemente 8, 9 gegeneinander zum Hindurchführen ihrer Verankerungsorgane durch die Montageöffnung 5 erfolgt gegen die Kraft der über die Stellplatte 14 auf die Oberseite der Bügelelemente 8, 9 wirkenden Druckfeder 13, sodass, wenn die Verankerungsorgane 21, 22 durch die Montageöffnung 5 der Sprosse 3 hindurchgeführt sind, selbsttätig in ihre die Schenkel 6, 6.1 und damit die Montageöffnung 5 hintergreifende Stellung, wie in Figur 7 gezeigt, einspringen. **In** dieser Stellung wird anschließend die Spannschraube 12 gespannt, um die Befestigungsschelle 1 mit dem durch seine Langgutaufnahme 10 geführten Kabel 2 an der Sprosse 3 zu fixieren.

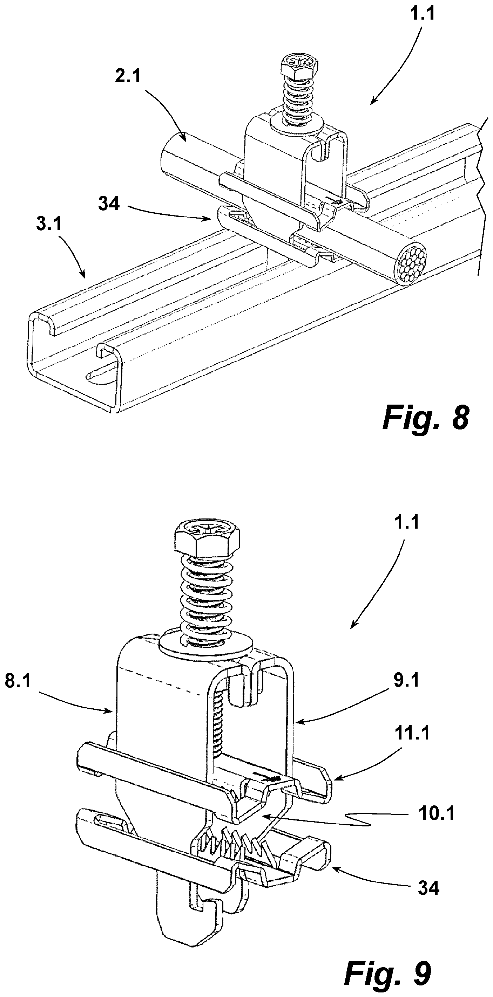

Figur 8 zeigt eine weitere Bügelschelle 1.1, die ebenso konzipiert ist wie die Bügelschelle 1 der vorstehenden Figuren. Daher gelten die vorstehenden Ausführungen zur Bügelschelle 1 gleichermaßen für die Bügelschelle 1.1. Nachfolgend wird daher nur auf die Unterschiede der Bügelschelle 1.1 gegenüber der Bügelschelle 1 eingegangen.

Die Bügelschelle 1.1 ist als Erdungsschelle ausgelegt. Die Druckplatte 11.1 dieser Bügelschelle 1.1 verfügt zu diesem Zweck über unterseitig in Richtung zur Langgutaufnahme 10.1 weisende Durchdringungskörperreihen 32. Die Durchdringungskörperreihen 32 bestehen aus mehreren in Reihe zueinander angeordneten, unter Ausbildung jeweils einer Spitze vorgesehenen Durchdringungskörper. Die Ebenen der Durchdringungskörperreihen 32 sind in Richtung zur Langgutaufnahme 10.1 etwas zueinander geneigt. Der Druckkörper 11.1 ist ferner ausgelegt, dass dieser zwei Schenkeldurchbrechungen 33, 33.1 aufweist, durch die die Schenkel 19.1, 20.1 der Bügelelemente 8.1, 9.1 hindurchgreifen. Über die Durchdringungskörper der Durchdringungskörperreihen 32 wird ein elektrischer Erdungsleiter, angeordnet unter einer äußeren Isolierung eines elektrischen Kabels kontaktiert, wenn die Bügelschelle 1.1 an einer Tragstruktur, wiederum durch eine Sprosse 3.1 in Figur 8 dargestellt, befestigt ist. Neben der Druckplatte 11.1 mit ihren Durchdringungskörperreihen 32 verfügt die Bügelschelle 1.1 ferner über ein Auflageglied 34, welches zwischen dem zu befestigenden elektrischen Kabel 2.1 und der Oberseite der Sprosse 3.1 angeordnet ist. Das Auflageglied 34 trägt seinerseits ebenfalls zwei Durchdringungskörperreihen 35, sodass beim Spannen der Bügelschelle 1 diese und die Durchdringungskörperreihen 32 der Druckplatte 11.1 von gegenüberliegenden Seiten in die Mantelisolierung des elektrischen Kabels 2.1 eingedrückt werden. Zumindest die Bügelelemente 8.1, 9.1, die Druckplatte 11.1 und die Auflageplatte 34 sind ebenso wie die Sprosse 3.1 elektrisch leitend, jedenfalls soweit, dass dieses für Erdungszwecke ausreicht. Auch das Auflageglied 34 verfügt über zwei Schenkeldurchbrechungen 36, 36.1, durch die die Schenkel 19.1, 20.1 hindurchgreifen. Über die Schenkeldurchbrechungen 33, 33.1 der Druckplatte 11.1 und diejenigen des Auflagegliedes 34 sind die Schenkel 19.1, 20.1 in Bezug auf ihre Verstellbarkeit geführt.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

| | | | |
|---|---|---|---|
| 1, 1.1 | Bügelschelle | 34 | Auflageglied |
| 2 | Kabel | 35 | Durchdringungskörperreihe |
| 3 | Sprosse | 36, 36.1 | Schenkeldurchbrechung |
| 4 | Befestigerkanal | | |
| 5 | Montageöffnung | S | Spannweite |
| 6, 6.1 | Schenkel | Sr | Reduzierte Spannweite |
| 7 | Bügelteil | | |
| 8. 8.1 | Bügelelement | | |
| 9, 9.1 | Bügelelement | | |
| 10, 10.1 | Langgutaufnahme | | |
| 11, 11.1 | Druckplatte | | |
| 12 | Spannschraube | | |
| 13 | Druckfeder | | |
| 14 | Stellplatte | | |
| 15 | Brückenteil | | |
| 16 | Spannmutter | | |
| 17 | Nietfortsatz | | |
| 18 | Öffnung | | |
| 19, 19.1 | Schenkel | | |
| 20, 20.1 | Schenkel | | |
| 21 | Verankerungsorgan | | |
| 22 | Verankerungsorgan | | |
| 23 | Widerlagerabschnitt | | |
| 24 | Widerlagerabschnitt | | |
| 25, 25.1 | Erster Stützabschnitt | | |
| 26, 26.1 | Zweiter Stützabschnitt | | |
| 27 | Spannmittelaussparung | | |
| 28, 18.1 | Anschlag | | |
| 29, 29.1 | Spannmutteranlagefortsatz | | |
| 30 | Stellschräge | | |
| 31 | Stellschräge | | |
| 32 | Durchdringungskörperreihe | | |
| 33, 33.1 | Schenkeldurchbrechung | | |

## Patentansprüche

1. Bügelschelle zum Befestigen eines Langgutes, etwa eines elektrischen Kabels (2, 2.1), an einer einen hinterschnittenen Befestigerkanal (4) aufweisenden Tragstruktur, etwa einer Sprosse einer Kabelleiter, welche Bügelschelle (1, 1.1) ein Bügelteil (7), durch dessen Schenkel (19, 20; 19.1, 20.1) und dessen die Schenkel (19, 20; 19.1, 20.1) verbindendes Brückenteil (15) eine Langgutaufnahme (10, 10.1) eingefasst ist und dessen Schenkel (19, 20; 19.1, 20.1) an ihrem Ende zumindest einen in den Hinterschnitt eines Befestigerkanals (4) der Tragstruktur einsetzbaren, quer zur Längserstreckung des Befestigerkanals (4) ausgerichteten Widerlagerabschnitt (23, 24) tragen, sowie eine gegenüber den Schenkeln (19, 20; 19.1, 20.1) in Richtung ihrer Längserstreckung verstellbaren und zum Befestigen eines Langgutes an einer Tragstruktur auf ein die Langgutaufnahme (10, 10.1) durchgreifendes Langgut wirkenden Druckplatte (11, 11.1) und eine auf die Druckplatte (11, 11.1) wirkende Spanneinrichtung zum Verspannen eines die Langgutaufnahme (10, 10.1) durchgreifenden Langgutes an der Tragstruktur aufweist, **dadurch gekennzeichnet, dass** das Bügelteil (7) mehrteilig ausgelegt ist und ein erstes Bügelelement (8, 8.1) und ein zweites Bügelelement (9, 9.1) umfasst, bei welchen Bügelelementen (8, 9; 8.1, 9.1) die Widerlagerabschnitte (23, 24) ihrer Verankerungsorgane (21, 22) in entgegengesetzte Richtungen weisend angeordnet sind und dass die Bügelelemente (8, 9; 8.1, 9.1) gegeneinander in Richtung des Durchgriffes eines Langgutes durch die Langgutaufnahme (10, 10.1) zur Reduzierung der effektiven Spannweite (S) der Bügelschelle (1, 1.1) in dem Abschnitt ihrer Verankerungsorgane (21, 22) zwecks Einführen der Verankerungsorgane (21, 22) in einen Befestigerkanal (4) einer Tragstruktur verstellbar sind.

2. Bügelschelle nach Anspruch 1, **dadurch gekennzeichnet, dass** die beiden Bügelelemente (8, 9; 8.1, 9.1) an ihrem dem Verankerungsorgan (21, 22) gegenüberliegenden Ende jeweils komplementär zueinander ausgelegte Stützabschnitte (25, 26; 25.1, 26.1) aufweisen, sodass jedes Bügelelement (8, 9; 8.1, 9.1) mit einem ersten Stützabschnitt (25, 25.1) auf einem zweiten Stützabschnitt (26, 26.1) des jeweils anderen Bügelelements (8, 9; 8.1, 9.1) abgestützt ist, durch welche in Eingriff gestellten Stützabschnitte (25, 26; 25.1, 26.1) der Bügelelemente (8, 9; 8.1, 9.1) das Brückenteil (15) als mehrteiliges Brückenteil (15) des Bügelteils (7) bereitgestellt ist.

3. Bügelschelle nach Anspruch 2, **dadurch gekennzeichnet, dass** die ersten und zweiten Stützabschnitte (25, 26; 25.1, 26.1) der Bügelelemente (8, 9; 8.1, 9.1) bezüglich der Materialstärke derselben höhenversetzt zueinander angeordnet sind.

4. Bügelschelle nach Anspruch 2 oder 3, **dadurch gekennzeichnet, dass** zumindest an einem Stützabschnitt jedes Bügelelements (8.1, 9.1) ein aus seiner Ebene abragender Anschlag angeformt ist, durch den die mit ihren Stützabschnitten in Eingriff gestellten Bügelelemente in Richtung der Längserstreckung der Langgutaufnahme formschlüssig zueinander gehalten sind.

5. Bügelschelle nach einem der Ansprüche 2 bis 4, **dadurch gekennzeichnet, dass** jedes Bügelelement (8, 9; 8.1, 9.1) in seinem Bügelteil (15) über zwei Anschläge (29, 29.1) verfügt, von denen jeweils einer zusammen mit demjenigen des anderen Bügelelements (26, 25; 26.1, 25.1) eine Aufnahme für ein Bestandteil, etwa einer Spannmutter (16), der Spanneinrichtung bereitstellt.

6. Bügelschelle nach einem der Ansprüche 1 bis 5, **dadurch gekennzeichnet, dass** jedes Bügelelement über zwei Anschläge verfügt, von denen jeweils einer als Schenkelteil mit einer Auslegung und Orientierung seines Verankerungsorgans ausgeführt ist, wie diejenige seines Schenkels.

7. Bügelschelle nach einem der Ansprüche 2 bis 6, **dadurch gekennzeichnet, dass** die ersten und zweiten Stützabschnitte (25, 26; 25.1, 26.1) der Bügelelemente (8, 9; 8.1, 9.1) durch eine Spannmittelaussparung (27) in Richtung der Längserstreckung der Langgutaufnahme (19, 10.1) voneinander getrennt sind.

8. Bügelschelle nach einem der Ansprüche 2 bis 7, **dadurch gekennzeichnet, dass** die Bügelschelle (1, 1.1) über eine auf die jeweilige Oberseite des Brückenteils (15) der Bügelelemente (8, 9; 8.1, 9.1) mit Vorspannung wirkende, gegen die Vorspannkraft verstellbare Stellplatte (14) verfügt.

9. Bügelschelle nach Anspruch 8, **dadurch gekennzeichnet, dass** zur Bereitstellung der auf die Stellplatte (14) wirkenden Vorspannkraft eine Schraubendruckfeder (13) vorgesehen ist.

10. Bügelschelle nach einem der Ansprüche 1 bis 9, **dadurch gekennzeichnet, dass** als Spanneinrichtung eine Spannschraube (12) und eine Spannmutter (16) vorgesehen sind.

11. Bügelschelle nach einem der Ansprüche 1 bis 10, **dadurch gekennzeichnet, dass** die Druckplatte (11.1) zwei Schenkeldurchbrechungen (33, 33.1) aufweist, von denen jeweils eine von einem Schenkel (19.1, 20.1) eines Bügelelementes (8.1, 9.1) durchgriffen ist.

12. Bügelschelle nach einem der Ansprüche 1 bis 11, **dadurch gekennzeichnet, dass** der Bügelschelle (1.1) ein die Langgutaufnahme (10.1) in Richtung zur Tragstruktur begrenzendes Auflageglied (34) zugeordnet ist.

13. Bügelschelle nach Anspruch 12, **dadurch gekennzeichnet, dass** das Auflageglied (34) zwei Schenkeldurchbrechungen (36, 36.1) aufweist, von denen jeweils eine von einem Schenkel (19.1, 20.1) eines Bügelelementes (8.1, 9.1) durchgriffen ist.

14. Bügelschelle nach einem der Ansprüche 1 bis 13, **dadurch gekennzeichnet, dass** die Bügelschelle (1.1) als Erdungsschelle ausgelegt ist und die Druckplatte (11.1) und, falls vorhanden, das Auflageteil (34) in Richtung zur Langgutaufnahme (10.1) abragende Durchdringungskörper tragen, die nach Spannen der Bügelschelle (1.1) eine Mantelisolation eines die Langgutaufnahme (10.1) durchgreifenden elektrischen Kabels (2) durchdringen.

## Geänderte Patentansprüche

### Geänderte Patentansprüche gemäss Regel 137(2) EPÜ.

1. Bügelschelle zum Befestigen eines Langgutes, etwa eines elektrischen Kabels (2, 2.1), an einer einen hinterschnittenen Befestigerkanal (4) mit einer Montageöffnung (5) aufweisenden Tragstruktur, etwa einer Sprosse einer Kabelleiter, welche Bügelschelle (1, 1.1) ein Bügelteil (7), durch dessen Schenkel (19, 20; 19.1, 20.1) und dessen die Schenkel (19, 20; 19.1, 20.1) verbindendes Brückenteil (15) eine Langgutaufnahme (10, 10.1) eingefasst ist und dessen Schenkel (19, 20; 19.1, 20.1) an ihrem Ende zumindest einen in den Hinterschnitt eines Befestigerkanals (4) der Tragstruktur einsetzbaren, quer zur Längserstreckung des Befestigerkanals (4) ausgerichteten Widerlagerabschnitt (23, 24) tragen, sowie eine gegenüber den Schenkeln (19, 20; 19.1, 20.1) in Richtung ihrer Längserstreckung verstellbaren und zum Befestigen eines Langgutes an einer Tragstruktur auf ein die Langgutaufnahme (10, 10.1) durchgreifendes Langgut wirkenden Druckplatte (11, 11.1) und eine auf die Druckplatte (11, 11.1) wirkende Spanneinrichtung zum Verspannen eines die Langgutaufnahme (10, 10.1) durchgreifenden Langgutes an der Tragstruktur aufweist, wobei das Bügelteil (7) mehrteilig ausgelegt ist und ein erstes Bügelelement (8, 8.1) und ein zweites Bügelelement (9, 9.1) umfasst, **dadurch gekennzeichnet, dass** bei den Bügelelementen (8, 9; 8.1, 9.1) die Widerlagerabschnitte (23, 24) ihrer Verankerungsorgane (21, 22) in entgegengesetzte Richtungen weisend angeordnet sind und dass die Bügelelemente (8, 9; 8.1, 9.1) gegeneinander in Richtung des Durchgriffes eines Langgutes durch die Langgutaufnahme (10, 10.1) zur Reduzierung der effektiven Spannweite (S) der Bügelschelle (1, 1.1) in dem Abschnitt ihrer Verankerungsorgane (21, 22) auf eine reduzierte Spannweite (Sr) verstellbar sind, damit in dieser Stellung der Bügelelemente (8, 9; 8.1, 9.1) die Verankerungsorgane (21, 22) durch die Montageöffnung (5) in den Befestigerkanal (4) einer Tragstruktur hindurchführbar sind.

2. Bügelschelle nach Anspruch 1, **dadurch gekennzeichnet, dass** die beiden Bügelelemente (8, 9; 8.1, 9.1) an ihrem dem Verankerungsorgan (21, 22) gegenüberliegenden Ende jeweils komplementär zueinander ausgelegte Stützabschnitte (25, 26; 25.1, 26.1) aufweisen, sodass jedes Bügelelement (8, 9; 8.1, 9.1) mit einem ersten Stützabschnitt (25, 25.1) auf einem zweiten Stützabschnitt (26, 26.1) des jeweils anderen Bügelelements (8, 9; 8.1, 9.1) abgestützt ist, durch welche in Eingriff gestellten Stützabschnitte (25, 26; 25.1, 26.1) der Bügelelemente (8, 9; 8.1, 9.1) das Brückenteil (15) als mehrteiliges Brückenteil (15) des Bügelteils (7) bereitgestellt ist.

3. Bügelschelle nach Anspruch 2, **dadurch gekennzeichnet, dass** die ersten und zweiten Stützabschnitte (25, 26; 25.1, 26.1) der Bügelelemente (8, 9; 8.1, 9.1) bezüglich der Materialstärke derselben höhenversetzt zueinander angeordnet sind.

4. Bügelschelle nach Anspruch 2 oder 3, **dadurch gekennzeichnet, dass** zumindest an einem Stützabschnitt jedes Bügelelements (8.1, 9.1) ein aus seiner Ebene abragender Anschlag angeformt ist, durch den die mit ihren Stützabschnitten in Eingriff gestellten Bügelelemente in Richtung der Längserstreckung der Langgutaufnahme formschlüssig zueinander gehalten sind.

5. Bügelschelle nach einem der Ansprüche 2 bis 4, **dadurch gekennzeichnet, dass** jedes Bügelelement (8, 9; 8.1, 9.1) in seinem Bügelteil (15) über zwei Anschläge (29, 29.1) verfügt, von denen jeweils einer zusammen mit demjenigen des anderen Bügelelements (26, 25; 26.1, 25.1) eine Aufnahme für ein Bestandteil, etwa einer Spannmutter (16), der Spanneinrichtung bereitstellt.

6. Bügelschelle nach einem der Ansprüche 2 bis 5, **dadurch gekennzeichnet, dass** die ersten und zweiten Stützabschnitte (25, 26; 25.1, 26.1) der Bügelelemente (8, 9; 8.1, 9.1) durch eine Spannmittelaussparung (27) in Richtung der Längserstreckung der Langgutaufnahme (19, 10.1) voneinander getrennt sind.

7. Bügelschelle nach einem der Ansprüche 2 bis 6, **dadurch gekennzeichnet, dass** die Bügelschelle (1, 1.1) über eine auf die jeweilige Oberseite des Brückenteils (15) der Bügelelemente (8, 9; 8.1, 9.1) mit Vorspannung wirkende, gegen die Vorspannkraft verstellbare Stellplatte (14) verfügt.

8. Bügelschelle nach Anspruch 7, **dadurch gekennzeichnet, dass** zur Bereitstellung der auf die Stellplatte (14) wirkenden Vorspannkraft eine Schraubendruckfeder (13) vorgesehen ist.

9. Bügelschelle nach einem der Ansprüche 1 bis 8, **dadurch gekennzeichnet, dass** als Spanneinrichtung eine Spannschraube (12) und eine Spannmutter (16) vorgesehen sind.

10. Bügelschelle nach einem der Ansprüche 1 bis 9, **dadurch gekennzeichnet, dass** die Druckplatte (11.1) zwei Schenkeldurchbrechungen (33, 33.1) aufweist, von denen jeweils eine von einem Schenkel (19.1, 20.1) eines Bügelelementes (8.1, 9.1) durchgriffen ist.

11. Bügelschelle nach einem der Ansprüche 1 bis 10, **dadurch gekennzeichnet, dass** der Bügelschelle (1.1) ein die Langgutaufnahme (10.1) in Richtung zur Tragstruktur begrenzendes Auflageglied (34) zugeordnet ist.

12. Bügelschelle nach Anspruch 11, **dadurch gekennzeichnet, dass** das Auflageglied (34) zwei Schenkeldurchbrechungen (36, 36.1) aufweist, von denen jeweils eine von einem Schenkel (19.1, 20.1) eines Bügelelementes (8.1, 9.1) durchgriffen ist.

13. Bügelschelle nach einem der Ansprüche 1 bis 12, **dadurch gekennzeichnet, dass** die Bügelschelle (1.1) als Erdungsschelle ausgelegt ist und die Druckplatte (11.1) und, falls vorhanden, das Auflageteil (34) in Richtung zur Langgutaufnahme (10.1) abragende Durchdringungskörper tragen, die nach Spannen der Bügelschelle (1.1) eine Mantelisolation eines die Langgutaufnahme (10.1) durchgreifenden elektrischen Kabels (2) durchdringen.

14. Anordnung umfassend eine Bügelschelle nach einem der Ansprüche 1 bis 13 sowie eine einen hinterschnittenen Befestigerkanal (4) mit einer Montageöffnung (5) aufweisende Tragstruktur, etwa eine Sprosse einer Kabelleiter, **dadurch gekennzeichnet, dass** die Bügelschelle (1, 1.1) durch Eingriff ihrer Schenkel (19, 20; 19.1, 20.1) in den Befestigerkanal (4) und Hintergreifen der Hinterschnitte des Befestigerkanals (4) mit ihren Widerlagerabschnitten (23, 24) an die Tragstruktur angeschlossen ist.

15. Anordnung nach Anspruch 14, **dadurch gekennzeichnet, dass** die Bügelschelle (1, 1.1) mit der Tragstruktur unter Zwischenschaltung eines in der Langgutaufnahme (10, 10.1) befindlichen Langgutes, etwa eines elektrischen Kabels (2), mit der Tragstruktur verspannt ist.
